(19) Europäisches Patentamt
European Patent Office
Office européen des brevets

(11) **EP 2 928 737 B1**

(12) **EUROPÄISCHE PATENTSCHRIFT**

(45) Veröffentlichungstag und Bekanntmachung des Hinweises auf die Patenterteilung:
**09.01.2019   Patentblatt 2019/02**

(21) Anmeldenummer: **13799511.4**

(22) Anmeldetag: **27.11.2013**

(51) Int Cl.:
**B60T 8/1755** ^(2006.01)

(86) Internationale Anmeldenummer:
**PCT/EP2013/074911**

(87) Internationale Veröffentlichungsnummer:
**WO 2014/086646 (12.06.2014 Gazette 2014/24)**

(54) **VERFAHREN ZUR REGELUNG DER FAHRDYNAMIK**

VEHICLE MOVEMENT DYNAMICS CONTROL METHOD

PROCÉDÉ DE RÉGULATION DE LA DYNAMIQUE DE CONDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2012   DE 102012222489**

(43) Veröffentlichungstag der Anmeldung:
**14.10.2015   Patentblatt 2015/42**

(73) Patentinhaber: **Continental Teves AG & Co. OHG 60488 Frankfurt am Main (DE)**

(72) Erfinder:
• **NICOLET, Damien**
  **60385 Frankfurt am Main (DE)**
• **BALAZS, Peter**
  **H-3508 Miskolc (HU)**

(56) Entgegenhaltungen:
EP-A1- 2 289 745       US-A1- 2005 012 389
US-A1- 2005 216 164    US-B1- 6 691 013

**Beschreibung**

Die Erfindung betrifft ein Verfahren gemäß Oberbegriff von Anspruch 1 und ein Bremssystem gemäß Oberbegriff von Anspruch 10.

Moderne Fahrzeuge weisen vielfach eine Fahrdynamikregelung auf, bei der das Ist-Verhalten beispielsweise mit Hilfe von Gierratensensor, Raddrehzahlsensoren und Querbeschleunigungssensor ermittelt und mit einem anhand des gemessenen Lenkwinkels über ein Fahrzeugmodell berechneten Soll-Verhalten verglichen wird. In einer Giermomentenregelung werden die gemessene Ist-Gierrate des Fahrzeugs und die berechnete Soll-Gierrate verglichen; wenn die Differenz einen Aktivierungsschwellenwert überschreitet und ggfs. weitere Eintrittsbedingungen erfüllt sind, so erfolgen fahrerunabhängige Bremseingriffe an einem oder mehreren Rädern. Wird ein Untersteuern festgestellt, wobei die Soll-Gierrate die Ist-Gierrate übersteigt, dann wird das kurveninnere Hinterrad abgebremst, um das Ist-Verhalten dem Soll-Verhalten anzunähern. Dies ermöglicht eine Korrektur leichten Untersteuerns; allerdings sind die erzielbaren Giermomente gering.

Eine Vorrichtung zur Regelung des Giermoments eines vierrädrigen Kraftfahrzeugs während einer Kurvenfahrt ist beispielsweise aus der EP 0 792 229 B1 bekannt. Diese weist eine Einrichtung zur Erkennung des aktuellen Reibwerts auf. Wenn das Fahrzeug eine Kurve durchfährt und der Giermomentregler in die Regelung eintritt, wird zumindest während der Giermomentregelung permanent ein aktueller Reibwert ermittelt. Der aktuelle Reibwert wird anhand der gemessenen Querbeschleunigung und einer beispielsweise mit Hilfe von Raddrehzahlsensoren ermittelten Längsbeschleunigung des Fahrzeugs berechnet.

Die EP 0 945 320 B1 offenbart ein Verfahren zur Regelung der Fahrdynamik, bei dem ein Untersteuern des Fahrzeugs korrigiert wird, indem eine maximale Querbeschleunigung geschätzt wird, die das Fahrzeug unter Stabilitätsgesichtspunkten nicht überschreiten darf, anhand der maximalen Querbeschleunigung eine Längsverzögerung berechnet wird, und die Geschwindigkeit des Fahrzeugs gemäß der berechneten Verzögerung durch Bremseingriffe an allen Rädern und eine Verringerung des Motormoments reduziert wird. Auf niedrigem Reibwert besteht die Gefahr, dass durch einen zu starken Bremseingriff auf der Hinterachse die Fahrstabilität verloren geht.

Aus der EP 1 220 771 B1 ist eine fahrzeugstabilisierende Einrichtung zum Einstellen oder Modifizieren von Bremsdrücken in den Radbremsen einer Bremsanlage bekannt, mit einer Untersteuererkennung zum Ermitteln eines Untersteuer-Fahrzustands, einer Einrichtung zum Berechnen einer Fahrzeugsollverzögerung und daraus abgeleitet einer Soll-Bremskraft oder eines Soll-Bremsdrucks in Abhängigkeit von dem Untersteuer-Fahrzustand, sowie einer Giermomenten-Einheit, die in Abhängigkeit von einer Regelabweichung ein benötigtes Giermoment berechnet. Die Soll-Bremskräfte an den Radbremsen der Vorderachse werden in Abhängigkeit der Fahrzeugsollverzögerung gebildet, wobei an dem kurvenäußeren Rad der Vorderachse eine das benötigte Giermoment erzeugende und den Untersteuer-Fahrzustand korrigierende Differenzbremskraft zu dem kurveninneren Rad der Vorderachse eingestellt wird. Gegebenenfalls wird an dem kurveninneren Hinterrad das restliche benötigte Giermoment umgesetzt. Dadurch, dass die Bremseingriffe an der Vorderachse erfolgen, wird eine Gefährdung der Fahrstabilität vermieden. Weil zur Regelung eines Untersteuerns erst eine Verzögerung ermittelt und dann in eine Druckanforderung umgesetzt wird, weist der Regler eine Vielzahl von Parametern auf, die an den jeweiligen Fahrzeugtyp angepasst werden müssen.

Aufgabe der vorliegenden Erfindung ist es daher, ein besonders einfaches Verfahren zur Regelung der Fahrdynamik anzugeben, welches ein Untersteuern des Fahrzeugs schnell und komfortabel regelt bzw. reduziert.

Diese Aufgabe wird erfindungsgemäß durch ein Verfahren gemäß Anspruch 1 gelöst.

Es wird also ein Verfahren zur Regelung der Fahrdynamik eines Kraftfahrzeugs bereitgestellt, bei dem eine gemessene Querdynamikgröße mit einer anhand eines Fahrzeugmodells berechneten Querdynamikgröße verglichen wird, wobei überprüft wird, ob ein Untersteuern des Fahrzeugs vorliegt, und in diesem Fall durch einen fahrerunabhängigen Aufbau von Bremskräften zumindest an den Rädern der Vorderachse, die Differenz zwischen gemessener und berechneter Querdynamikgröße verringert wird. Erfindungsgemäß wird der zeitliche Gradient der Bremskraft an jedem Rad, an dem eine Bremskraft aufgebaut wird, nach Maßgabe der Differenz zwischen gemessener und berechneter Querdynamikgröße gewählt.

Die erfindungsgemäße Fahrdynamikregelung basiert auf der Überlegung, die zusätzliche Druckanforderung bzw. den Gradienten des Bremskraftaufbaus nach Maßgabe der Abweichung zwischen berechneter Querdynamikgröße und gemessener Querdynamikgröße zu wählen. Hierdurch kann auch die Ermittlung einer Sollverzögerung wegfallen, d.h. der Regler ist strukturell einfacher. Dies hat mehrere Vorteile:

1. Da eine Druckanforderung anhand einer vom Fahrer nachvollziehbaren Querdynamikgröße berechnet wird und die Anzahl der Parameter geringer ist, kann die als Applikation bekannte Anpassung des Reglers an einen neuen Fahrzeugtyp schnell und unkompliziert vorgenommen werden.

2. Indem die Komplexität der Berechnung einer Druckanforderung bzw. der aufzubauenden Bremskraft deutlich reduziert wurde, verringert sich die benötigte Rechenleistung eines zur Durchführung des Verfahrens geeigneten Mikrocontrollers entsprechend. Somit können auch preisgünstigere Mikrocontroller in einem entsprechenden Steuergerät eingesetzt werden.

3. Dadurch, dass der Bremsmomentaufbau bei starkem Untersteuern schnell erfolgt, wird das vorhandene Seitenkraftführungspotential des Reifens optimal ausgenutzt.

4. Wenn nur eine geringe Untersteuerneigung besteht, kann der Eingriff sanfter und damit für den Fahrer komfortabler erfolgen.

Es ist zweckmäßig, wenn die betrachtete Querdynamikgröße der Lenkwinkel ist, also der Einschlagwinkel der Vorderräder oder der Lenkradwinkel, wobei insbesondere der berechnete Lenkwinkel anhand des Einspurmodells zumindest aus Gierrate und Fahrzeuggeschwindigkeit ermittelt wird. Diese Wahl der Querdynamikgröße ist insbesondere deshalb vorteilhaft, weil der gemessene Lenkwinkel den Fahrerwunsch unverzögert wiedergibt, d.h. anders als bei einer Regelung der Gierrate nicht erst die (durch die Massenträgheit verzögerte) Fahrzeugreaktion messbar ist. Ein Einlenken des Fahrers wirkt sich direkt auf die Regelung aus, wodurch das Fahrzeug dem Fahrerwunsch besser folgt und die Regelung komfortabler wird.

Vorzugsweise ist/sind die aufgebaute Bremskraft und/oder der zeitliche Gradient der aufgebauten Bremskraft an dem kurvenäußeren Vorderrad um jeweils einen Asymmetriewert geringer als an dem kurveninneren Vorderrad. Somit kann ein Giermoment in das Fahrzeug eingebracht werden, welches das Untersteuern weiter reduziert. Insbesondere wird der jeweilige Asymmetriewert nach Maßgabe von der Fahrzeuggeschwindigkeit und/oder eines geschätzten Reibwerts und/oder der Differenz zwischen gemessener und berechneter Querdynamikgröße gewählt.

Die Erfindung betrifft ferner ein Bremssystem für ein Kraftfahrzeug, umfassend mindestens zwei Sensoren zur Messung von Querdynamikgrößen wie Gierrate und/oder Querbeschleunigung und/oder Lenkwinkel und einen Raddrehzahlsensor an jedem Rad des Fahrzeugs, wobei zumindest die Räder der Vorderachse des Kraftfahrzeugs Radbremsen aufweisen, welche einen radindividuellen fahrerunabhängigen Aufbau von Bremskräften ermöglichen, sowie ein elektronisches Steuergerät, welches ein erfindungsgemäßes Verfahren durchführt.

Weitere bevorzugte Ausführungsformen ergeben sich aus den Unteransprüchen und der nachfolgenden Beschreibung eines Ausführungsbeispiels an Hand von Figuren.

Es zeigen

Fig. 1    eine schematische Darstellung eines beispielhaften Kraftfahrzeugs, und

Fig. 2    eine beispielhafte Struktur einer erfindungsgemäßen Regelung.

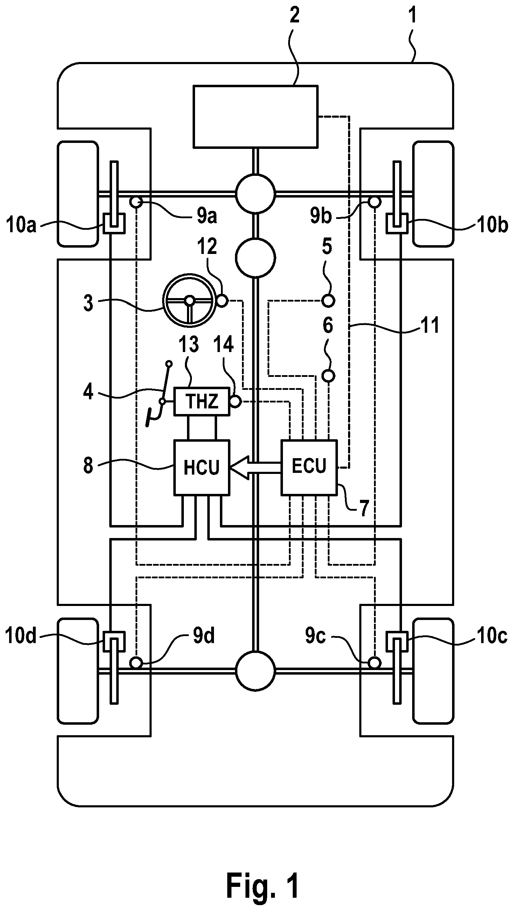

Figur 1 zeigt eine schematische Darstellung eines beispielhaften Kraftfahrzeugs 1, welches zur Durchführung des erfindungsgemäßen Verfahrens geeignet ist. Es weist einen Antriebsmotor 2, der zumindest einen Teil der Räder des Fahrzeugs antreibt, ein Lenkrad 3, ein Bremspedal 4, welches mit einem Tandemhauptzylinder (THZ) 13 verbunden ist, und vier individuell ansteuerbare Radbremsen 10a-10d auf. Das erfindungsgemäße Verfahren ist auch durchführbar, wenn nur ein Teil der Fahrzeugräder angetrieben wird und/oder konventionelle Differentiale eingesetzt werden. Neben hydraulischen Reibbremsen können auch an einem, mehreren oder allen Rädern elektromechanisch betätigte Reibbremsen als Radbremsen eingesetzt werden. Das Fahrzeug kann auch einen elektrischen Antrieb aufweisen, wobei insbesondere das Bremsmoment an mindestens einem Rad zumindest teilweise von der oder den als Generator betriebenen elektrischen Maschine/n erzeugt wird.

Zur Erfassung von fahrdynamischen Zuständen sind ein Lenkwinkelsensor 12, vier Raddrehzahlsensoren 9a - 9d, ein Querbeschleunigungssensor 5, ein Gierratensensor 6 und mindestens ein Drucksensor 14 für den vom Bremspedal erzeugten Bremsdruck vorhanden. Dabei kann der Drucksensor 14 auch ersetzt sein durch einen Pedalweg- oder Pedalkraftsensor, falls die Hilfsdruckquelle derart angeordnet ist, dass ein vom Fahrer aufgebauter Bremsdruck von dem der Hilfsdruckquelle nicht unterscheidbar ist oder ein elektromechanischer Bremsaktuator mit bekanntem Zusammenhang zwischen Pedalstellung und Bremsmoment verwendet wird. Der Lenkwinkelsensor kann den Lenkradwinkel oder andere Größen messen, aus denen Informationen zum vom Fahrer gewünschten Kurs ermittelt werden können.

Das elektronische Steuergerät (ECU) 7 empfängt die Daten der verschiedenen Sensoren und steuert die Hydraulikeinheit (HCU) 8. Zusätzlich werden das aktuell von Antriebsmotor 2 erzeugte Antriebsmoment und das vom Fahrer gewünschte Moment bestimmt. Dabei kann es sich auch um indirekt ermittelte Größen handeln, die beispielsweise aus einem Motorkennfeld abgeleitet werden und dem elektronischen Steuergerät 7 über eine Schnittstelle 11 eines Fahrzeugdatenbusses wie z.B. CAN vom nicht gezeigten Motorsteuergerät übertragen werden.

Das Fahrverhalten des Kraftfahrzeugs 1 wird wesentlich durch die Fahrwerksauslegung beeinflusst, wobei unter anderem Radlastverteilung, Elastizität der Radaufhängungen und Reifeneigenschaften das Eigenlenkverhalten bestimmen. In bestimmten Fahrsituationen, welche durch einen vorgegebenen, gewünschten Kurvenradius und dem Reibwert zwischen Reifen und Fahrbahn gekennzeichnet sind, kann es zu einem Verlust der Fahrstabilität kommen, wobei das vom Fahrer gewünschte Lenkverhalten mit der gegebenen Fahrwerksauslegung nicht erreicht werden kann. Mit den vorhandenen Sensoren kann der Fahrerwunsch erkannt und die Realisierung durch das Fahrzeug überprüft werden.

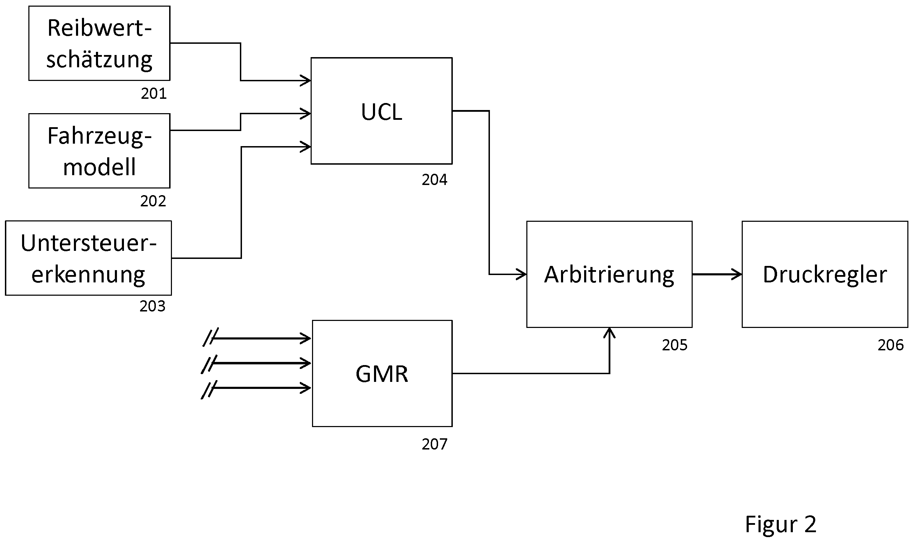

Figur 2 zeigt eine beispielhafte Struktur einer erfindungsgemäßen Regelung, die auch ganz oder teilweise als von einem Mikrocontroller ausführbares Programm implementiert sein kann. Hierbei sind einzelne Funktionseinheiten bzw. Module als Rechtecke dargestellt, wobei Pfeile den Signal- bzw. Informationsfluss andeuten.

Modul 201 dient der Reibwertschätzung, wobei als Eingangsgrößen zweckmäßigerweise zumindest die mit Sensor 5 gemessene Querbeschleunigung $a_Q$ und eine gemessene oder aus Raddrehzahlsensorsignalen ermittelte Längsbeschleunigung $a_L$ dienen. Der momentan genutzte Reibwert $\mu$ gibt den mindestens verfügbaren Reibwert an und wird beispielsweise gemäß folgender Beziehung berechnet (hier bezeichnet g die Erdbeschleunigung) :

$$\mu = \sqrt{\left(\frac{a_L}{g}\right)^2 + \left(\frac{a_Q}{g}\right)^2} \qquad (1)$$

Modell 202 dient der Beschreibung des Soll-Fahrzeugverhaltens, wobei als Eingangsgrößen zumindest die mit Gierratensensor 6 gemessene Gierrate $\dot{\psi}$, die beispielsweise anhand Raddrehzahlsensorsignalen ermittelte Fahrzeuggeschwindigkeit $V$ und der in Modul 201 geschätzte Reibwert $\mu$ dienen. In einem Fahrzeugmodell, wie z.B. dem bekannten Einspurmodell, wird aus den Eingangsgrößen, konstanten Eigenschaften des Fahrzeugs und gegebenenfalls weiterer Größen der theoretische Einschlagwinkel $\delta_{theo}$ berechnet, welcher den Winkel bezeichnet, unter dem die gelenkten Räder eines Fahrzeugs zu dessen Längsachse stehen. Einschlagwinkel $\delta$ und Lenkradwinkel $\lambda$ sind gemäß $\delta = \lambda/K$ miteinander verknüpft, wobei K die Lenkübersetzung angibt. Zwischen Lenkradwinkel und Einschlagwinkel besteht also eine direkte Korrespondenz; sie werden im Folgenden auch unter dem Begriff Lenkwinkel zusammengefasst. Das Einspurmodell eines Kraftfahrzeugs fasst die Räder einer Achse zusammen, woraufhin der Zusammenhang zwischen dem Einschlagwinkel $\delta_{theo}$ und der Gierrate $\dot{\psi}$ wie folgt beschrieben werden kann:

$$\delta_{theo} = \frac{\dot{\psi} \cdot l}{V} + EG \cdot \dot{\psi} \cdot V \qquad (2)$$

Hier bezeichnet $V$ die aktuell vorliegende Fahrzeuggeschwindigkeit, während der Radstand $l$ und der Eigenlenkgradient $EG$ Fahrzeugparameter sind, die durch die Konstruktion gegeben sind bzw. in einem Fahrversuch gemessen werden. Gleichung (2) gilt nur unter bestimmten Fahrbedingungen; durch Berücksichtigung weiterer Terme kann der Anwendungsbereich des Fahrzeugmodells erweitert werden.

Modul 203 dient zur Erkennung, ob ein Untersteuern des Fahrzeugs vorliegt, wobei als Eingangsgrößen zumindest der berechnete Lenkwinkel $\delta_{theo}$ und der gemessene Lenkwinkel $\delta_{mess}$ dienen. Prinzipiell kann die Untersteuererkennung und/oder - regelung auch anhand der anderen mit einem Sensor gemessenen Querdynamikgrößen wie Querbeschleunigung oder Gierrate erfolgen. Im Hinblick auf eine direkte Reaktion auf den Fahrerwunsch ist eine Betrachtung des Lenkwinkels aber vorteilhaft.

Zweckmäßigerweise wird ein Untersteuern festgestellt, wenn der Betrag der gemessenen Querdynamikgröße um mehr als einen Aktivierungsschwellenwert größer ist als der Betrag der berechneten Querdynamikgröße und die Vorzeichen von gemessener und berechneter Querdynamikgröße übereinstimmen. Sobald die Lenkwinkeldifferenz also den Aktivierungsschwellenwert überschreitet, wird die Untersteuerregelung aktiviert. Entsprechend wird der fahrerunabhängige Aufbau von Bremsmomenten beendet, wenn die Differenz zwischen gemessener Querdynamikgröße und berechneter Querdynamikgröße einen Beendigungsschwellenwert unterschreitet, welcher insbesondere kleiner ist als der Aktivierungsschwellenwert. Indem eine Hysterese vorgesehen ist, wird ein sofortiger Wiedereintritt in die Untersteuerregelung vermieden.

Für Aktivierung und Beendigung der Regelung werden vorzugsweise weitere Bedingungen überprüft, so kann eine Aktivierung z.B. nur dann erfolgen, wenn das Fahrzeug mindestens mit einer vorgegebenen Geschwindigkeit vorwärts fährt. Auch bei einer sehr großen Gierbeschleunigung und/oder einem dynamischen d.h. sich schnell ändernden Lenken durch den Fahrer kann die Aktivierung unterbleiben.

Modul 204 stellt den eigentlichen Untersteuerregler UCL bereit, wobei als Eingangsgrößen vorzugsweise der geschätzte Reibwert $\mu$, ein von der Untersteuererkennung ausgegebenes Aktivierungssignal und die Lenkwinkeldifferenz $\Delta\lambda$ dienen. Zweckmäßigerweise wird die Berechnung einer Bremskraft- bzw. Druckanforderung in regelmäßigen Zeit-

abständen $t_{loop}$ wiederholt, z.B. indem eine Programmschleife bzw. ein Loop immer wieder durchlaufen wird. Dann kann die zusätzliche Bremskraft- bzw. Druckanforderung $\frac{\Delta p}{loop}$ gemäß folgender Gleichung bestimmt werden:

$$\frac{\Delta p}{loop} = (\Delta\lambda - (\varepsilon - \tau)) \cdot \kappa \qquad (3)$$

Somit ist der zeitliche Gradient des Bremskraft- bzw. Druckaufbaus abhängig von der Lenkwinkeldifferenz, d. h. dem Ausmaß des Untersteuerns. Neben der Eintrittsschwelle $\varepsilon$ wird eine Hysterese $\tau$ zwischen Ein- und Austrittsschwelle berücksichtigt (bzw. die Lenkwinkeldifferenz um die Austrittsschwelle korrigiert). Die Regelabweichung wird mit einem dem geschätzten Reibwert abhängigen Proportionalitätsfaktor $\kappa = f(\mu)$ multipliziert. Es ist zweckmäßig, die Reibwertabhängigkeit mittels einer Kennlinie zu beschreiben, welche z.B. anhand von Fahrversuchen ermittelt wurde. Ergänzend kann es auch vorgesehen sein, weitere additive Anteile von Bremskraft- bzw. Druckanforderungen nach Maßgabe der zeitlichen Änderung der Lenkwinkeldifferenz $\dot{\Delta\lambda}$ oder eines zeitlichen Integrals über die Lenkwinkeldifferenz zu bestimmen.

Die von dem Untersteuerregler angeforderten Bremskräfte bzw. entsprechende Solldrücke $\hat{p}_i$ werden Modul 205 zugeführt. Hier findet eine Arbitrierung dieser Druckanforderung mit der Druckanforderung $\tilde{p}_i$ von Modul 207, einem an sich bekannten Giermomentenregler GMR, sowie ggfs. weiterer nicht gezeigter Module statt.

Arbitrierung 205 wählt anhand vorgegebener Kriterien für jedes Rad die umzusetzende Bremskraft- bzw. Druckanforderung $p_i$ aus und gibt diese an Druckregler 206 weiter. Dieser stellt zweckmäßigerweise eine Bremsschlupfregelung bereit und steuert die Bremsaktuatoren zum Aufbau einer Bremskraft an. Bremskraft- und Druckanforderungen sind dabei prinzipiell gleichwertig und unterscheiden sich nur durch einen konstanten Faktor.

Der Bremsdruckaufbau in einer hydraulischen Bremsanlage mit Tandemhauptbremszylinder erfolgt zweckmäßigerweise mit einer Umschalt-/Trennventilregelung, wie diese in der EP 1 177 121 B1 beschrieben ist.

Das erfindungsgemäße Verfahren ist auch durchführbar mit einem "brake-by-wire"-Bremssystem, bei dem Fahrerbremswunsch und Bremskraftaufbau vollständig entkoppelt sind, wie beispielsweise dem in der DE 10 2010 040 097 A1 offenbarten Bremssystem.

Die Verteilung der Bremskräfte zwischen den Rädern der Vorderachse, wobei also das kurvenäußere Rad weniger stark gebremst werden kann, sowie weitere optionale Merkmale des erfindungsgemäßen Verfahrens können der EP 1 220 771 B1 entnommen werden.

Dadurch, dass der zeitliche Gradient des Bremskraftaufbaus nach Maßgabe des anhand einer Querdynamikgröße quantifizierten Untersteuerns gewählt wird, ist die Fahrzeugreaktion für den Fahrer immer komfortabel und subjektiv nachvollziehbar.

Indem als Querdynamikgröße der gemessene Lenkwinkel gewählt wird, verursacht ein Einlenken des Fahrers unverzögert einen stärkeren Bremseingriff. Somit kann eine besonders direkte Reaktion des Fahrzeugs auf den Fahrerwunsch gewährleistet werden.

**Patentansprüche**

1. Verfahren zur Regelung der Fahrdynamik eines Kraftfahrzeugs, bei dem eine gemessene Querdynamikgröße mit einer anhand eines Fahrzeugmodells berechneten Querdynamikgröße verglichen wird, wobei überprüft wird, ob ein Untersteuern des Fahrzeugs vorliegt, und in diesem Fall durch einen fahrerunabhängigen Aufbau von Bremskräften an den Rädern zumindest der Vorderachse die Differenz zwischen gemessener und berechneter Querdynamikgröße verringert wird, **dadurch gekennzeichnet, dass** der zeitliche Gradient der Bremskraft an jedem Rad, an dem eine Bremskraft aufgebaut wird, nach Maßgabe der Differenz zwischen gemessener und berechneter Querdynamikgröße gewählt wird.

2. Verfahren nach Anspruch 1, **dadurch gekennzeichnet, dass** ein Untersteuern festgestellt wird, wenn der Betrag der gemessenen Querdynamikgröße um mehr als einen Aktivierungsschwellenwert größer ist als der Betrag der berechneten Querdynamikgröße und die Vorzeichen von gemessener und berechneter Querdynamikgröße übereinstimmen, wobei der fahrerunabhängige Aufbau von Bremskräften beendet wird, wenn die Differenz zwischen gemessener Querdynamikgröße und berechneter Querdynamikgröße einen Beendigungsschwellenwert unterschreitet, welcher insbesondere kleiner ist als der Aktivierungsschwellenwert.

3. Verfahren nach einem der Ansprüche 1 oder 2, **dadurch gekennzeichnet, dass** der zeitliche Gradient zumindest eines ersten Anteils der an einem Rad aufgebauten Bremskraft proportional zur Differenz zwischen gemessener und berechneter Querdynamikgröße gewählt wird, wobei insbesondere nur der einen Versatzwert übersteigende Anteil der Differenz zwischen gemessener und berechneter Querdynamikgröße berücksichtigt wird.

4. Verfahren nach Anspruch 3, **dadurch gekennzeichnet, dass** ein Proportionalitätsfaktor des Bremskraftaufbaus nach Maßgabe eines geschätzten Reibwerts gewählt wird, insbesondere anhand von einer Kennlinie.

5. Verfahren nach Anspruch 3 oder 4, **dadurch gekennzeichnet, dass** weiterhin ein zweiter Anteil der an einem Rad aufgebauten Bremskraft nach Maßgabe der zeitlichen Ableitung der Differenz zwischen gemessener und berechneter Querdynamikgröße und/oder ein dritter Anteil der an einem Rad aufgebauten Bremskraft nach Maßgabe des zeitlichen Integrals der Differenz zwischen gemessener und berechneter Querdynamikgröße aufgebaut wird/werden.

6. Verfahren nach mindestens einem der vorhergehenden Ansprüche, **dadurch gekennzeichnet, dass** die Querdynamikgröße der Lenkwinkel ist, also der Einschlagwinkel der Vorderräder oder der Lenkradwinkel, wobei insbesondere der berechnete Lenkwinkel anhand des Einspurmodells zumindest aus Gierrate und Fahrzeuggeschwindigkeit berechnet wird.

7. Verfahren nach mindestens einem der vorhergehenden Ansprüche, **dadurch gekennzeichnet, dass** die Bremskraft an jedem Rad oder die Summe der Bremskräfte an den Rädern nach Maßgabe des geschätzten Reibwerts und/oder eines maximal zulässigen Schlupfs, also einer relativen Verringerung einer Radgeschwindigkeit bezogen auf die Fahrzeuggeschwindigkeit, auf einen Maximalwert begrenzt wird.

8. Verfahren nach mindestens einem der vorhergehenden Ansprüche, **dadurch gekennzeichnet, dass** die aufgebaute Bremskraft und/oder der zeitliche Gradient der aufgebauten Bremskraft an dem kurvenäußeren Vorderrad um jeweils einen Asymmetriewert geringer ist/sind als an dem kurveninneren Vorderrad, wobei insbesondere der jeweilige Asymmetriewert nach Maßgabe von der Fahrzeuggeschwindigkeit und/oder eines geschätzten Reibwerts und/oder der Differenz zwischen gemessener und berechneter Querdynamikgröße gewählt wird.

9. Verfahren nach einem der Ansprüche 1 bis 8, **dadurch gekennzeichnet, dass** zusätzlich mittels eines Giermomentreglers (GMR) eine Bremskraftanforderung bestimmt wird und eine Arbitrierung zwischen den Bremskraftanforderungen des Untersteuerreglers und der Bremskraftanforderung des Giermomentreglers stattfindet.

10. Bremssystem für ein Kraftfahrzeug, umfassend mindestens zwei Sensoren zur Messung von Querdynamikgrößen wie Gierrate und/oder Querbeschleunigung und/oder Lenkwinkel und einen Raddrehzahlsensor an jedem Rad des Fahrzeugs, wobei zumindest die Räder der Vorderachse des Kraftfahrzeugs Radbremsen aufweisen, welche einen radindividuellen fahrerunabhängigen Aufbau von Bremskräften ermöglichen, **gekennzeichnet durch** ein elektronisches Steuergerät, welches ein Verfahren nach mindestens einem der vorhergehenden Ansprüche durchführt.

11. Bremssystem nach Anspruch 10, **dadurch gekennzeichnet, dass** die Räder zumindest der Vorderachse mit einem oder je einem Elektromotoren verbunden sind, und dass der Aufbau von Bremsmoment zumindest teilweise durch den oder die als Generatoren betriebene Elektromotoren erfolgt.

## Claims

1. Method for controlling the movement dynamics of a motor vehicle, in which a measured transverse dynamics variable is compared with a transverse dynamics variable which is calculated by means of a vehicle model, wherein it is checked whether the vehicle is understeering and, in this case, the difference between the measured and the calculated transverse dynamics variable is reduced by building up braking forces at the wheels of at least the front axle independently of the driver, **characterized in that** the time gradient of the braking force at each wheel at which a braking force is built up is selected in accordance with the difference between the measured and the calculated transverse dynamics variable.

2. Method according to Claim 1, **characterized in that** understeer is detected if the absolute value of the measured transverse dynamics variable is greater than the absolute value of the calculated transverse dynamics variable by more than an activation threshold value and the signs of the measured and the calculated transverse dynamics variable agree, wherein the buildup of braking forces independently of the driver is terminated when the difference between the measured transverse dynamics variable and the calculated transverse dynamics variable falls below a termination threshold value, which is, in particular, lower than the activation threshold value.

3. Method according to either of Claims 1 or 2, **characterized in that** the time gradient at least of a first part of the braking force built up at one wheel is selected in a manner proportional to the difference between the measured and the calculated transverse dynamics variable, wherein, in particular, only the part of the difference between the measured and the calculated transverse dynamics variable which exceeds an offset value is taken into account.

4. Method according to Claim 3, **characterized in that** a proportionality factor of the braking force buildup is selected in accordance with an estimated friction coefficient, in particular by means of a characteristic curve.

5. Method according to Claim 3 or 4, **characterized in that** a second part of the braking force built up at one wheel is furthermore built up in accordance with the time derivative of the difference between the measured and the calculated transverse dynamics variable and/or a third part of the braking force built up at one wheel is built up in accordance with the time integral of the difference between the measured and the calculated transverse dynamics variable.

6. Method according to at least one of the preceding claims, **characterized in that** the transverse dynamics variable is the steering angle, i.e. the lock angle of the front wheels or the steering wheel angle, wherein, in particular, the calculated steering angle is calculated by means of the single-track model at least from the yaw rate and vehicle speed.

7. Method according to at least one of the preceding claims, **characterized in that** the braking force at each wheel or the sum of the braking forces at the wheels is limited to a maximum value in accordance with the estimated friction coefficient and/or with a maximum permissible slip, i.e. a relative reduction of a wheel speed in relation to the vehicle speed.

8. Method according to at least one of the preceding claims, **characterized in that** the braking force built up and/or the time gradient of the braking force built up at the front wheel on the outside of the bend is less than that at the front wheel on the inside of the bend by in each case an asymmetry value, wherein, in particular, the respective asymmetry value is selected in accordance with the vehicle speed and/or an estimated friction coefficient and/or the difference between the measured and the calculated transverse dynamics variable.

9. Method according to one of Claims 1 to 8, **characterized in that** a braking force demand is additionally determined by means of a yaw moment controller (GMR), and arbitration takes place between the braking force demand of the understeer controller and the braking force demand of the yaw moment controller.

10. Braking system for a motor vehicle, comprising at least two sensors for measuring transverse dynamics variables, such as the yaw rate and/or transverse acceleration and/or steering angle, and a wheel speed sensor at each wheel of the vehicle, wherein at least the wheels of the front axle of the motor vehicle have wheel brakes, which enable braking forces to be built up independently of the driver at individual wheels, **characterized by** an electronic control unit which carries out a method according to at least one of the preceding claims.

11. Braking system according to Claim 10, **characterized in that** the wheels at least of the front axle are connected to an electric motor, or are each connected to an electric motor, and **in that** the buildup of braking torque is accomplished at least in part by the electric motor or electric motors operated as generators.

**Revendications**

1. Procédé de régulation de la dynamique de roulement d'un véhicule automobile, procédé dans lequel une grandeur de dynamique transversale mesurée est comparée à une grandeur de dynamique transversale calculée sur la base d'un modèle de véhicule, une vérification étant effectuée pour savoir si un sous-virage du véhicule est présent et, dans ce cas, la différence entre les grandeurs de dynamique transversale mesurée et calculée étant réduite par le développement, indépendant du conducteur, de forces de freinage au niveau des roues d'au moins l'essieu avant, **caractérisé en ce que** le gradient temporel de la force de freinage sur chaque roue, au niveau de laquelle une force de freinage est développée, est sélectionné en fonction de la différence entre les grandeurs de dynamique transversale mesurée et calculée.

2. Procédé selon la revendication 1, **caractérisé en ce qu'**un sous-virage est détecté lorsque l'amplitude de la grandeur de dynamique transversale mesurée est supérieure à l'amplitude de la grandeur de dynamique transversale calculée de plus d'une valeur de seuil d'activation et les signes des grandeurs de dynamique transversale mesurée et calculée coïncident, le développement, indépendant du conducteur, des forces de freinage étant terminé lorsque la différence entre les grandeurs de dynamique transversale mesurée et calculée devient inférieure à une valeur de seuil de terminaison qui est notamment inférieure à la valeur du seuil d'activation.

3. Procédé selon l'une des revendications 1 et 2, **caractérisé en ce que** le gradient temporel d'au moins une première partie de la force de freinage développée au niveau d'une roue est choisi proportionnellement à la différence entre les grandeurs de dynamique transversale mesurée et calculée, seule la partie de la différence entre les grandeurs de dynamique transversale mesurée et calculée qui dépasse une valeur de décalage étant en particulier prise en compte.

4. Procédé selon la revendication 3, **caractérisé en ce qu'**un facteur de proportionnalité du développement de force freinage est choisi en fonction d'un coefficient de frottement estimé, notamment sur la base d'une courbe caractéristique.

5. Procédé selon la revendication 3 ou 4, **caractérisé en ce qu'**en outre une deuxième partie de la force de freinage développée au niveau d'une roue est développée en fonction de la dérivée temporelle de la différence entre les grandeurs de dynamique transversale mesurée et calculée et/ou une troisième partie de la force de freinage développée au niveau d'une roue est développée en fonction de l'intégrale temporelle de la différence entre les grandeurs de dynamique transversale mesurée et calculée.

6. Procédé selon l'une au moins des revendications précédentes, **caractérisé en ce que** la grandeur de dynamique transversale est l'angle de direction, c'est-à-dire l'angle de braquage des roues avant ou l'angle de roue de direction, l'angle de direction calculé étant notamment calculé sur la base du modèle à voie unique au moins à partir du taux de lacet et de la vitesse du véhicule.

7. Procédé selon l'une au moins des revendications précédentes, **caractérisé en ce que** la force de freinage développée au niveau de chaque roue ou la somme des forces de freinage développées au niveau des roues est limitée à une valeur maximale en fonction du coefficient de frottement estimé et/ou d'un glissement maximal admissible, donc d'une réduction relative de la vitesse de roue par rapport à la vitesse du véhicule.

8. Procédé selon l'une au moins des revendications précédentes, **caractérisé en ce que** la force de freinage développée et/ou le gradient temporel de la force de freinage développée au niveau de la roue avant extérieure à la courbe, sont inférieurs d'une valeur asymétrique à ceux au niveau de la roue avant à l'intérieur de la courbe, la valeur d'asymétrie respective étant en particulier choisie en fonction de la vitesse du véhicule et/ou d'un coefficient de frottement estimé et/ou de la différence entre les grandeurs de dynamique transversale mesurée et calculée.

9. Procédé selon l'une des revendications 1 à 8, **caractérisé en ce qu'**une demande de force de freinage est en outre déterminée au moyen d'un régulateur de moment de lacet (GMR) et un arbitrage est effectué entre les demandes de force de freinage du régulateur de sous-virage et la demande de force de freinage du régulateur de moment de lacet.

10. Système de freinage destiné à véhicule automobile, comprenant au moins deux capteurs destinés à mesurer des grandeurs de dynamique transversale telles que le taux de lacet et/ou l'accélération latérale et/ou l'angle de direction et un capteur de vitesse de rotation de roue au niveau de chaque roue du véhicule, au moins les roues de l'essieu avant du véhicule automobile comportant des freins de roue qui permettent un développement de forces de freinage qui est indépendant du conducteur et qui est propre à la roue, **caractérisés par** une unité de commande électronique qui met en oeuvre un procédé selon l'une au moins des revendications précédentes.

11. Système de freinage selon la revendication 10, **caractérisé en ce que** les roues au moins de l'essieu avant sont reliées à un moteur électrique ou sont chacune reliées à un moteur électrique, et **en ce que** le développement du couple de freinage est effectué au moins partiellement par le moteur électrique ou par les moteurs électriques utilisés comme générateurs.

**Fig. 1**

Reibwert-schätzung

201

Fahrzeug-modell

202

Untersteuer-erkennung

203

UCL

204

GMR

207

Arbitrierung

205

Druckregler

206

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0792229 B1
- EP 0945320 B1
- EP 1220771 B1
- EP 1177121 B1
- DE 102010040097 A1